# EUROPEAN PATENT SPECIFICATION

(11) **EP 1 621 802 B1**
(45) Date of publication and mention of the grant of the patent: **08.07.2009**
(21) Application number: 05016319.5
(22) Date of filing: 27.07.2005
(51) Int. Cl.: F16H 61/00, F16H 57/02, F16H 7/02, F16H 9/18, F16H 57/04, B62M 7/12

(54) **V-belt type continuously variable transmission**
Stufenlos verstellbares V-Riemengetriebe
Variateur continu de vitesse à courroie en "V"

(30) Priority: 13.06.2005 JP 2005172611; 27.07.2004 JP 2004219289
(43) Date of publication of application: 01.02.2006
(73) Proprietor: Yamaha Hatsudoki Kabushiki Kaisha, Iwata-shi, Shizuoka-ken 438-8501 (JP)
(72) Inventor: Sugitani, Tsuyoshi, Iwata-shi, Shizuoka-ken 438-8501 (JP); Takebe, Mitsukazu, Iwata-shi, Shizuoka-ken 438-8501 (JP); Fujii, Isao, Iwata-shi, Shizuoka-ken 438-8501 (JP); Hayashi, Junji, Iwata-shi, Shizuoka-ken 438-8501 (JP); Unno, Toshio, Iwata-shi, Shizuoka-ken 438-8501 (JP)
(74) Representative: Grünecker, Kinkeldey, Stockmair & Schwanhäusser Anwaltssozietät

(56) References cited:
- EP-A- 1 443 246
- EP-A1- 0 408 074
- FR-A1- 2 518 684
- JP-A- 2001 048 081

## Description

The present invention relates to a V-belt type continuously variable transmission according to the preamble part of claim 1. In particular, the present invention relates to a V-belt type continuously variable transmission in which a V-belt is extended between a primary sheave and a secondary sheave.

V-belt type continuously variable transmissions have been broadly used in small-sized vehicles such as scooter type motorbikes. In this V-belt type continuously variable transmission, a V-belt is wound around a pair of a primary sheave and a secondary sheave disposed on a primary shaft into which a driving power of a power source such as an engine is input and a secondary shaft which extracts a driving power for a driving wheel, respectively, and the sheaves change groove widths. The groove width of each sheave is changed by a groove width adjustment mechanism to thereby adjust a wound diameter of the V-belt with respect to each sheave, and accordingly a transmission gear ratio between the sheaves is adjusted in a non-step manner.

Usually, each of the primary sheave and the secondary sheave comprises a fixed sheave and a movable sheave between which a V-groove is formed. Each movable sheave is movably disposed in an axial direction of the primary shaft or the secondary shaft. Moreover, when the movable sheave is moved by the groove width adjustment mechanism, the transmission gear ratio can be adjusted in the non-step manner.

As the groove width adjustment mechanism in this type of V-belt type continuously variable transmission, there has heretofore been proposed a mechanism provided with: a sheave moving mechanism which gives an axial displacement to the movable sheave of the primary sheave in accordance with a rotation input into a sliding gear (reciprocating gear) rotatably attached to the primary shaft; and an electric motor which gives a desired rotation to the sliding gear via a row of gears. When the movable sheave is moved and operated by the electric motor, the transmission gear ratio can be arbitrarily adjusted.

Moreover, in order to control a movement of the movable sheave by the electric motor, there is proposed a V-belt type continuously variable transmission (see Japanese Utility Model Publication No. 07-41960) in which a sheave position detection sensor for detecting a position of the movable sheave is disposed in an outer periphery of the sliding gear disposed in an innermost portion from the primary sheave in a transmission casing.

JP 2001-048081 discloses a V-belt continuously variable transmission which is readable on the preamble part of claim 1. Therein, a sheave position detection sensor whose detector is movable in the axial direction is disposed apart from an outer surface of the movable sheave of the primary sheave in the axial direction.

Additionally, usually in order to cool each sheave or the V-belt, outside air is introduced into the casing which houses the V-belt type continuously variable transmission. For example, an air introducing port is disposed in a portion which covers an outer part of the primary sheave, and an air exhaust port for discharging air from the casing is disposed in a portion which covers an outer part of the secondary sheave.

In this case, an outside air current introduced into the casing is a wear powder conveying current which conveys toward the air exhaust port wear powders of the V-belt generated by friction with each sheave.

Therefore, in the constitution of Japanese Utility Model Publication No. 07-41960 in which the sheave position detection sensor is disposed in the innermost portion from the primary sheave in a housing space of the casing, the wear powders conveyed via the outside air current easily stick to the sheave position detection sensor. A dust-proof measure needs to be provided in the sensor in order to prevent an erroneous operation of the sensor by the sticking of the wear powders. As the dust-proof measure, the sensor is enlarged. However, in this case, the enlarged sensor interrupts the outside air current in the casing, and a cooling performance by the outside air is sometimes lowered.

Moreover, as described above in JP 2001-048081, in the constitution in which the sheave position detection sensor whose detector is movable in the axial direction is disposed apart from the outer surface of the movable sheave of the primary sheave in the axial direction, a large space for installing the sheave position detection sensor has to be secured outside the primary sheave. To secure the large installation space, a width-direction (axial direction of the primary shaft, etc.) dimension of the V-belt type continuously variable transmission is enlarged. Therefore, there is a problem that the transmission is disadvantageous when mounted on the motorbike or the like in which reduction of the width-direction dimension is regarded as an important problem.

FR 2 518 684 is related to a belt transmission having an air cooling function for a scooter type motorcycle. The air introduced through an inlet open end is guided to vanes arranged on the outer periphery of a fixed sheave of a drive pulley. Said air flows through the transmission casing towards the driven pulley. The air is discharged from the transmission casing via a communication hole, a fresh air discharge passage and a fresh air of said port at the rear end of the transmission casing.

It is an objective of the present invention to provide a compact V-belt type continuously variable transmission in which a sheave position detection sensor to be disposed in a casing can be miniaturized in order to prevent an increase of a width-direction dimension.

According to the present invention, this objective is solved by a V-belt type continuously variable transmission comprising primary and secondary sheaves defining V-grooves for winding a belt there between, the sheaves being movable in an axial direction to change a groove width of the V-grooves by a groove width adjustment mechanism, and being housed in a casing having an air introducing port for introducing outside air into the casing and an air exhaust port for discharging air from the casing, and a sheave position detection sensor detecting a sheave position of a movable sheave, wherein the sheave position detection sensor is disposed in the casing in the vicinity of the air introducing port in an air current path from the air introducing port to the air exhaust port.

According to another preferred embodiment, the sheave position detection sensor comprises a sensor main body being disposed outside the primary sheave or the secondary sheave and in a range of a width occupied by the corresponding sheave and comprising a detector extending out of the sensor main body, and being movable in accordance with the sheave position of the movable sheave.

Therein, it is further preferable if the sheave position detection sensor is installed in a region of the belt wound around at a time when a wound diameter of the V-belt wound around the primary sheave or the secondary sheave is maximum as viewed in the axial directions of the primary and secondary shafts.

According to another preferred embodiment, the sheave position detection sensor comprises a rotary encoder for detecting a rotation of an arm for detection, which rotates in accordance with the sheave position of the movable sheave.

Within all of the above-described embodiments, it is still further preferable if there is provided a primary shaft, into which a driving power of a power source is input; a secondary shaft, which is disposed in parallel with the primary shaft; the primary sheave and the secondary sheave being disposed on the primary shaft and the secondary shaft, respectively, the primary sheave and the secondary sheave having sheaves which define a V-groove for winding the belt there between, the sheaves being movable in an axial direction to change a groove width of the V-groove; the V-belt being wound around the V-grooves of the primary and secondary sheaves and transmitting a rotary driving power between the sheaves; the groove width adjustment mechanism, which adjusts the groove widths of the primary sheave and the secondary sheave; and the casing housing and holding the primary sheave and the secondary sheave.

Further beneficially, there is provided a vehicle on which a V-belt type continuously variable transmission according to the above embodiments is mounted.

In the following, the present invention is explained in greater detail with respect to several embodiments thereof in conjunction with the accompanying drawings, wherein
FIG. 1 is a side view of a scooter type motorbike provided with a power unit whose engine is combined with a V-belt type continuously variable transmission according to a first embodiment;
FIG. 2 is a side view of the power unit of FIG. 1 excluding a casing which covers the outside of the V-belt type continuously variable transmission;
FIG. 3 is a sectional view along a line B-B of the V-belt type continuously variable transmission shown in FIG. 2;
FIG. 4 is an explanatory view showing a current of air in the casing in the V-belt type continuously variable transmission shown in FIG. 3;
FIG. 5 is a sectional view along a line C-C of the V-belt type continuously variable transmission shown in FIG. 2;
FIG. 6 is an enlarged side view of a sheave position detection sensor incorporated in a groove width adjustment mechanism shown in FIG. 5;
FIG. 7 is an enlarged side view showing a modification of the sheave position detection sensor incorporated in the groove width adjustment mechanism shown in FIG. 5;
FIG. 8 is an enlarged side view showing another modification of the sheave position detection sensor incorporated in the groove width adjustment mechanism shown in FIG. 5;
FIG. 9 is an explanatory view of another embodiment of the sheave position detection sensor disposed in the V-belt type continuously variable transmission;
FIG. 10 is an explanatory view showing an unfavorable example of the sheave position detection sensor disposed in the V-belt type continuously variable transmission;
FIG. 11 is a schematic side view of the V-belt type continuously variable transmission showing a favorable installation range of the sheave position detection sensor which is disposed outside a primary or secondary sheave;
FIG. 12 is a major part sectional view of the V-belt type continuously variable transmission according to a second embodiment; and
FIG. 13 is an enlarged front view of the sheave position detection sensor shown in FIG. 12.

A preferable embodiment of a V-belt type continuously variable transmission will be described hereinafter in more detail with reference to the drawings.

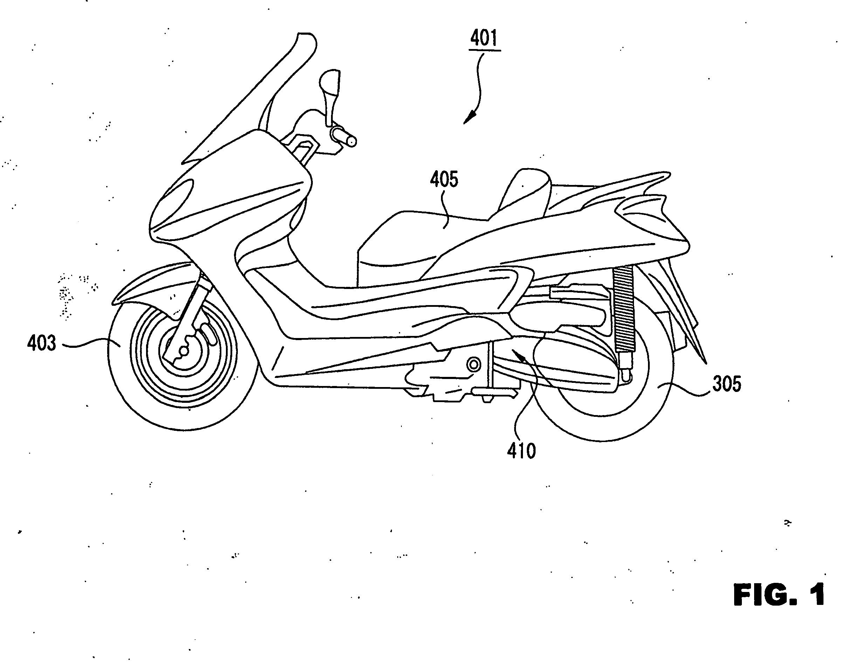

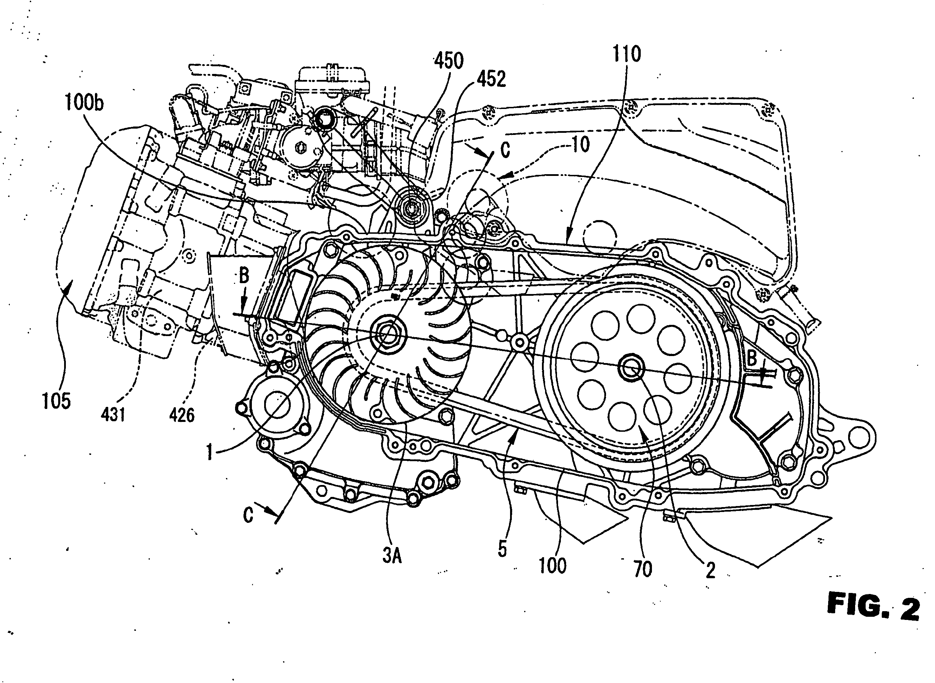

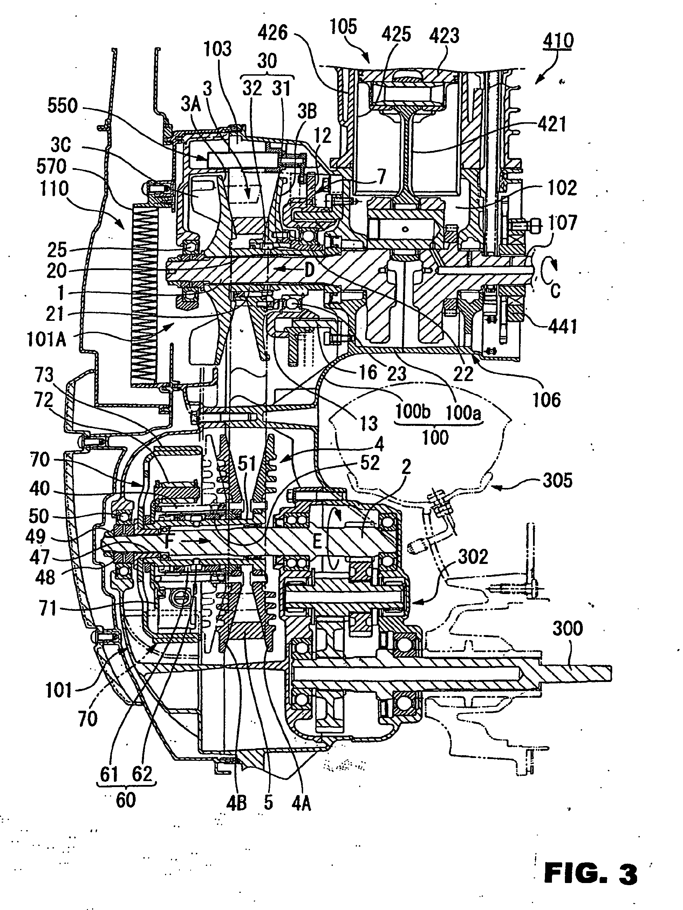

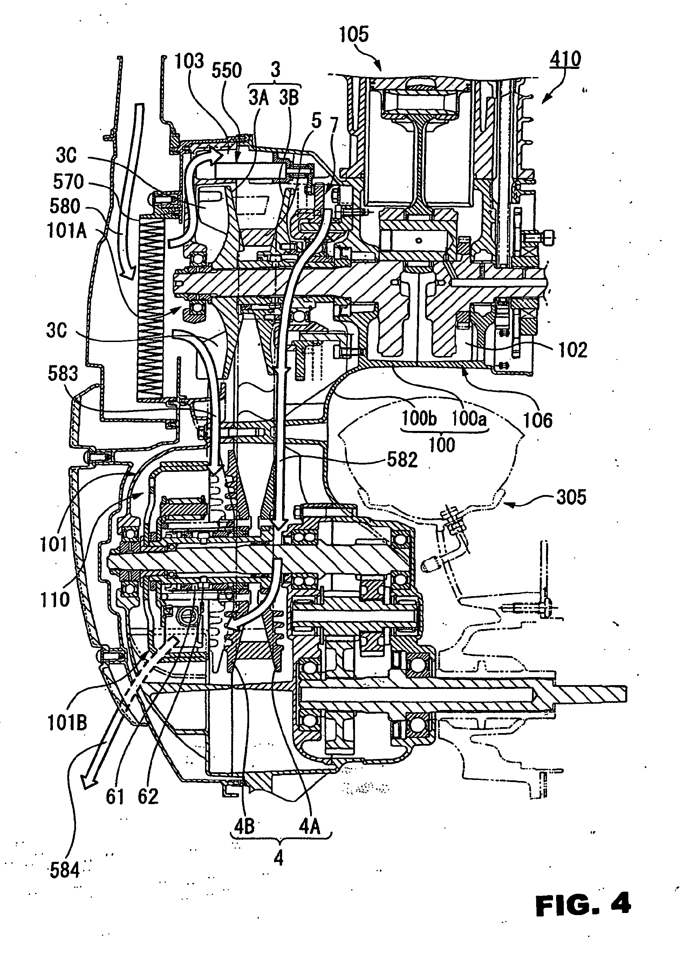

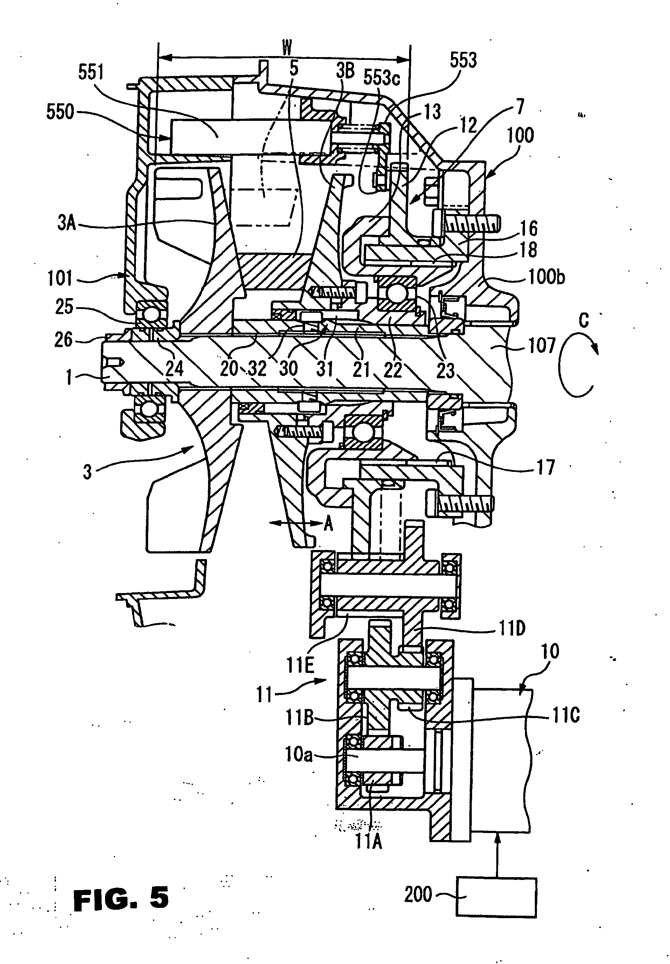

FIG. 1 is a side view showing a scooter type motorbike provided with a power unit whose engine is combined with the V-belt type continuously variable transmission according to a first embodiment; FIG. 2 is a side view of the power unit shown in FIG. 1 from which a casing for covering the outside of the V-belt type continuously variable transmission is removed; FIG. 3 is a sectional view along a line B-B of the V-belt type continuously variable transmission shown in FIG. 2; FIG. 4 is an explanatory view showing a current of air in the casing in the V-belt type continuously variable transmission shown in FIG. 3; and FIG. 5 is a sectional view along a line C-C of the V-belt type continuously variable transmission shown in FIG. 2.

In a motorbike 401 shown in FIG. 1, a power unit 410 is disposed in a position under a seat 405 between a front wheel 403 and a rear wheel 305 which is a driving wheel. A greater part of a front surface and opposite side surfaces of the vehicle is covered with a cowl.

As shown in FIGS. 2 and 3, the power unit 410 described herein comprises: an engine 105; transmission casings 100, 101 extending backwards from a crank case 106 of the engine 105; and a V-belt type continuously variable transmission 110 which is housed in a space (belt chamber 103) formed by these transmission casings 100, 101 and the crank case 106 and which varies a speed of an output of the engine 105. The output of the continuously variable transmission 110 is transmitted to an axle 300 of the rear wheel 305 disposed as the driving wheel behind the engine 105 via an automatic centrifugal clutch 70, and a reducer 302 comprising a row of gears.

In the power unit 410 of the present embodiment, as shown in FIG. 3, a crank chamber 102 is defined by a right-side part 100a of the transmission casing 100 and the crank case 106, and the belt chamber 103 is defined by a left-side part 100b of the transmission casing 100 and the transmission casing 101. Moreover, the V-belt type continuously variable transmission 110 is housed in the belt chamber 103.

It is to be noted that the transmission casing and the crank case may be independently constituted, the crank case only may define the crank chamber, and the transmission casing only may define the belt chamber.

As shown in FIGS. 2 and 3, the engine 105 comprises: the right-side part 100a of the transmission casing 100 and the crank case 106 which correspond to a casing for rotatably supporting a crank shaft 107; a piston 423 connected to the crank shaft 107 via a connecting rod 421; a cylinder block 426 which is bonded to an upper part of the crank case 106 to provide a cylinder section (combustion chamber) 425 where the piston 423 slides; and a cylinder head 431 provided with air suction and exhaust ports with respect to each cylinder section 425 and an ignition plug, and bonded to an upper part of the cylinder block 426.

In the engine 105 of the present embodiment, the crank shaft 107 is disposed whose axial line is directed in a width direction of a vehicle body.

A flywheel 441 is attached to a right end of the crank shaft 107, and this flywheel 441 is provided with a generator (not shown). This generator generates a power by rotation of the crank shaft 107, and supplies the power to electric components mounted on the vehicle, or charges a battery mounted on the vehicle.

A primary shaft 1 is integrally provided on a left end of the crank shaft 107, and is an input shaft of the V-belt type continuously variable transmission 110. To a left-side surface of the crank case 106, the transmission casings 100, 101 are attached as the casings which define the belt chamber 103 as a space for housing the V-belt type continuously variable transmission 110.

As shown in FIG. 2, in an outer periphery of an upper surface of the right-side part 100a of the transmission casing 100 defining the crank chamber 102 and the crank case 106, a rotation support section 452 is disposed which is pivotably connected to a vehicle body frame via an inserted pivot shaft 450.

The V-belt type continuously variable transmission 110 comprises: the primary shaft 1 formed integrally with the crank shaft 107 which is an output shaft of the engine 105 as a power source; a secondary shaft 2 which is disposed in parallel with the primary shaft 1 and which extracts a driving power for the driving wheel 305; a primary sheave 3 and a secondary sheave 4 which are disposed on the primary shaft 1 and the secondary shaft 2, respectively, the primary sheave and the secondary sheave having fixed sheaves 3A, 4A and movable sheaves 3B, 4B which define V-grooves for winding a belt therebetween, the movable sheaves 3B, 4B being movable in an axial direction (in opposite directions in FIG. 3) to change groove widths of the V-grooves; a V-belt 5 which is wound around the V-grooves of the primary and secondary sheaves 3 and 4 and which transmits a rotary driving power between the sheaves 3 and 4; a groove width adjustment mechanism 7 which moves the movable sheave 3B by an electric motor 10 to thereby adjust the groove widths of the primary and secondary sheaves 3 and 4; and a sheave position detection sensor 550 which detects a position of the movable sheave 3B in order to control an operation of the electric motor 10. When the groove widths of the primary sheave 3 and the secondary sheave 4 are changed by this groove width adjustment mechanism 7, a wound diameter of the V-belt 5 with respect to each of the sheaves 3 and 4 is adjusted, and a transmission gear ratio is adjusted in a non-step manner between the primary sheave 3 and the secondary sheave 4.

As shown in FIG. 4, in the transmission casing 101 of the present embodiment, an air introducing port 101A for introducing outside air is formed in a wall part which covers a side part of the primary sheave 3. Moreover, an air exhaust port 101B for discharging air from the casing is formed in a wall part which covers a side part of the secondary sheave 4.

Moreover, in the air introducing port 101 A, an air cleaner 570 is disposed which filters the outside air introduced from the air introducing port 101A into the belt chamber 103. On an outer surface of the fixed sheave 3A which faces the air introducing port 101A, a plurality of vanes 3C are disposed which suck the outside air by a rotating operation of the primary sheave 3.

As shown by an arrow 580 in FIG. 4, the outside air is introduced from the air introducing port 101A into the belt chamber 103 between the transmission casings 100, 101 by sucking functions by the vanes 3C of the fixed sheave 3A. The outside air flows from a primary sheave 3 side toward the secondary sheave 4 as shown by arrows 581, 582, 583 in FIG. 4, and cools the respective sheaves 3, 4, the V-belt 5 and the like. The air is discharged from the air exhaust port 101B as shown by an arrow 584.

In the V-belt type continuously variable transmission 110 of the present embodiment, the groove width adjustment mechanism 7 comprises: the electric motor 10 (see FIG. 2) which is means for applying an arbitrary moving thrust to the movable sheave 3B of the primary sheave 3; a primary-side operation mechanism (so-called torque cam) 30 which is disposed between the movable sheave 3B and the primary shaft 1 and which applies a moving thrust to the movable sheave 3B in a direction where a torque difference is eliminated, when the torque difference is made between rotary torques of the primary shaft 1 and the movable sheave 3B; a compression coil spring 40 which is means for applying a thrust to the movable sheave 4B of the secondary sheave 4 in a direction where the groove width is reduced; and a secondary-side operation mechanism (so-called torque cam) 60 which is disposed between the movable sheave 4B and the secondary shaft 2 and which applies a moving thrust to the movable sheave 4B in a direction where a torque difference is eliminated, when the torque difference is made between rotary torques of the secondary shaft 2 and the movable sheave 4B.

In the present embodiment, as shown in FIGS. 2 and 5, the electric motor 10 of the groove width adjustment mechanism 7 is disposed behind the rotation support section 452 which is connected to the vehicle body frame in the outer periphery of the upper part of the left-side part 100b of the transmission casing 100.

It is to be noted that in FIG. 3, arrows C, E indicate rotating directions of the primary shaft 1 and the secondary shaft 2, respectively. An arrow D indicates the direction of the thrust generated in the movable sheave 3B by the primary-side operation mechanism 30, and an arrow F indicates the direction of the thrust generated in the movable sheave 4B by the secondary-side operation mechanism 60.

Moreover, in the present embodiment, the variable transmission 110 is housed in the belt chamber 103 disposed adjacent to the crank case 106 of the engine 105 and defined by the left-side part 100b of the transmission casing 100 and the casing 101, and the primary shaft 1 is constituted integrally with the crank shaft 107 of the engine 105.

The secondary shaft 2 is connected to the axle 300 via the reducer 302, and the driving wheel 305 is attached to the axle 300. The primary sheave 3 is disposed in the outer periphery of the primary shaft 1, and the secondary sheave 4 is attached to the outer periphery of the secondary shaft 2 via the centrifugal clutch 70.

As shown in FIG. 5, the primary sheave 3 comprises: the fixed sheave 3A fixed to one end of the primary shaft 1; and the movable sheave 3B which is movable in the axial direction (arrow A direction in the figure) of the primary shaft 1. The V-groove around which the V-belt 5 is wound is formed between facing conical surfaces of the fixed sheave 3A and the movable sheave 3B.

One end of the primary shaft 1 is supported by the casing 101 via a bearing 25, a sleeve 24 into which the bearing 25 is fitted, and a sleeve 21 described later are fixed by a lock nut 26, and a boss section of the fixed sheave 3A is accordingly fixed in such a manner that the section does not move in the axial direction.

The movable sheave 3B has a cylindrical boss section through which the primary shaft 1 extends, and a cylindrical slider 22 is fixed to one end of the boss section. The sleeve 21 is disposed between the slider 22 and the primary shaft 1, and is fitted into the outer periphery of the primary shaft 1 via a spline 20. The sleeve 21 rotates integrally with the primary shaft 1. Moreover, the slider 22 is disposed movably in the axial direction in the outer periphery of the sleeve 21.

In the slider 22, a cam groove 31 is formed in such a manner as to extend obliquely with respect to the axial direction, and a guide pin 32 protruding to the outer periphery of the sleeve 21 is slidably inserted into the cam groove 31. Accordingly, the movable sheave 3B integrated with the slider 22 is movable in the axial direction of the primary shaft 1 while rotating integrally with the primary shaft 1.

The cam groove 31 and the guide pin 32 constitute the above-described primary-side operation mechanism 30. Therefore, a direction of tilt of the cam groove 31 is set to a direction (e.g., a direction in which the moving thrust having a direction (arrow D direction) to reduce the groove width of the primary sheave 3 is applied to the movable sheave 3B, when the rotary torque of the primary shaft 1 is greater than that of the movable sheave 3B) in which the moving thrust having a direction to eliminate the torque difference is applied to the movable sheave 3B of the primary sheave 3, when the torque difference is made between the rotary torques of the primary shaft 1 and the movable sheave 3B. A path of the cam groove 31 including a tilt angle may be set to an arbitrary form such as a linear or curved form in accordance with an imparted performance, and is easily worked.

On the other hand, on an inner surface of the left-side part 100b of the transmission casing 100 which faces the movable sheave 3B, a cylindrical feed guide 16 is screwed and fixed in such a manner as to protrude toward the movable sheave 3B. The feed guide 16 is disposed coaxially with respect to the primary shaft 1, and a female screw 17 is formed in an inner peripheral surface of the feed guide 16. A reciprocating gear 12 is fitted into an outer periphery of the feed guide 16 slidably in an axial direction and a peripheral direction.

This reciprocating gear 12 is connected to one end of an outer peripheral wall of an annular rotary ring 13 which is bent into a U-sectional-shape from an inner peripheral wall toward the outer peripheral wall, and a male screw 18 formed in the outer peripheral surface of the inner peripheral wall interlocks with the female screw 17 of the feed guide 16. The inner peripheral wall of the rotary ring 13 is connected to the slider 22 integrated with the movable sheave 3B via a bearing 23.

By this constitution, when the reciprocating gear 12 rotates, the reciprocating gear 12 and the rotary ring 13 move in the axial direction by leading functions of the female screw 17 and the male screw 18. Accordingly, the movable sheave 3B integrated with the slider 22 moves, and the groove width of the primary sheave 3 changes. It is to be noted that trapezoidal screws are used in the male screw 18 and the female screw 17, but triangular screws may be applied.

In the electric motor 10 for arbitrarily moving the movable sheave 3B of the primary sheave 3, a motor output shaft 10a is connected to the reciprocating gear 12 via a gear transmission mechanism 11 constituted by a combination multi-staged spur gears 11A to 11E.

Moreover, a sheave moving mechanism is constituted in such a manner that the mechanism can move the movable sheave 3B in the axial direction via the reciprocating gear 12, when the rotation of the electric motor 10 is controlled by a control unit 200 (see FIG. 5).

The control unit 200 detects a position of the movable sheave 3B by the sheave position detection sensor 550, and is utilized in controlling an operation of the electric motor 10.

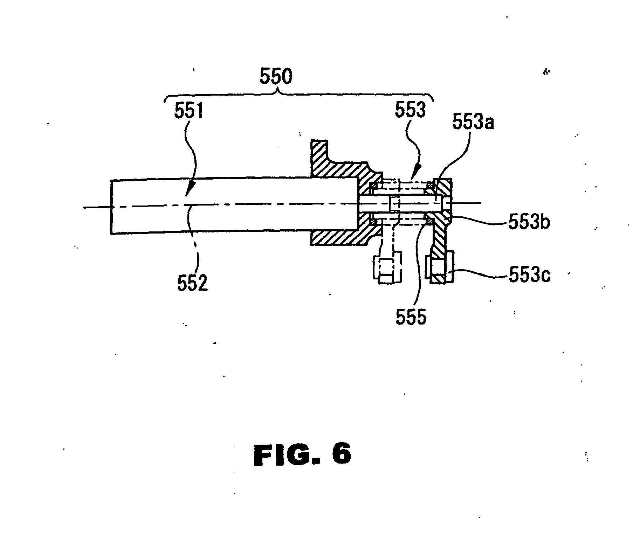

In the present embodiment, as shown in FIG. 6, the sheave position detection sensor 550 is a sensor (e.g., position sensor of a variable resistance system, a magnetostrictive system, a magnetic system or the like) comprising: a sensor main body 551; and a detector 553 disposed on the sensor main body 551 linearly movably along a central axial line 552 of the sensor main body 551.

The detector 553 comprises: a shaft portion 553a held on the sensor main body 551 movably along the central axial line 552; a tip extending portion 553b extending from the tip of the detector 553 in a direction crossing the central axial line 552 at right angles; and a contact portion 553c which protrudes from the tip extending portion 553b and which abuts on a member to be detected.

The detector 553 is urged in a direction protruding from the sensor main body 551 by a compression coil spring (urging means) 555 disposed in a compressed state between the sensor main body 551 and the tip extending portion 553b.

As shown in FIG. 4, the sheave position detection sensor 550 is disposed in the vicinity of the air introducing port 101A in an air current path from the air introducing port 101 A to the air exhaust port 101 B.

In the present embodiment, the sheave position detection sensor 550 is disposed outside the primary sheave 3 in the vicinity of the air introducing port 101 A and in a range of a sheave occupied width W occupied by the corresponding sheave and the reciprocating gear 12 of the groove width adjustment mechanism 7. The sensor is fixed to the casing 101 in a state in which the axial direction of the sensor main body 551 is aligned with an axis line direction of the primary shaft 1, and the contact portion 553c abuts on the side surface of the reciprocating gear 12. It is to be noted that the contact portion 553c is maintained in a state in which the portion abuts on the reciprocating gear 12 by an urging force of the compression coil spring 555.

Therefore, the detector 553 of the sheave position detection sensor 550 is displaced integrally with the reciprocating gear 12 accompanying the movement of the reciprocating gear 12 in the axial direction, and detects a change of a sheave position of the movable sheave 3B via the displacement of the reciprocating gear 12 in the axial direction.

As shown in FIG. 3, the secondary sheave 4 comprises: the fixed sheave 4A connected to the secondary shaft 2 via the centrifugal clutch 70; and the movable sheave 4B which is movable in the axial direction (arrow B direction in the figure) of the secondary shaft 2. The V-groove around which the V-belt 5 is wound is formed between facing conical surfaces of the fixed sheave 4A and the movable sheave 4B.

The fixed sheave 4A is provided with a cylindrical guide 51, and this guide 51 is rotatably supported on the outer periphery of the secondary shaft 2 via a bearing. The centrifugal clutch 70 disposed between the fixed sheave 4A and the secondary shaft 2 is provided with: a centrifugal plate 71 which rotates integrally with the guide 51 of the fixed sheave 4A; a centrifugal weight 72 supported by the centrifugal plate 71; and a clutch housing 73 detachably attached to the centrifugal weight 72.

Here, the centrifugal plate 71 is integrally rotatably connected to the guide 51 of the fixed sheave 4A by spline fitting. The clutch housing 73 is fixed to one end of the secondary shaft 2 via a spline-fitted boss member 47. It is to be noted that one end of the secondary shaft 2 is supported by the transmission casing 101 via a bearing 50, and a sleeve 48 into which the bearing 50 is fitted is fixed via a lock screw 49, and the clutch housing 73 and the boss member 47 are fixed in such a manner as to be prevented from being moved in the axial direction.

By this constitution, when the number of rotations of the centrifugal plate 71 rotating integrally with the fixed sheave 4A reaches a predetermined value, the centrifugal weight 72 moves to the outside by a centrifugal force, and contacts the clutch housing 73, and the rotation of the fixed sheave 4A is transmitted to the secondary shaft 2.

The movable sheave 4B is integrated with a cylindrical slider 52 which is supported movably in the axial direction on the outer periphery of the guide 51 of the fixed sheave 4A, and the sheave is urged by the compression coil spring 40 in a direction in which the groove width of the V-groove is reduced. The compression coil spring 40 is disposed in a compressed state in which one end of the spring abuts on a protruding portion of the outer periphery of the slider 52 and the other end thereof abuts on a spring bearing of the centrifugal plate 71.

A cam groove 61 is formed in the slider 52 integrated with this movable sheave 4B, and is tilted with respect to an axial line. In this cam groove 61, a guide pin 62 is slidably inserted which protrudes from the outer periphery of the guide 51 integrated with the fixed sheave 4A. Accordingly, the movable sheave 4B integrated with the slider 52 is movable in the axial direction of the secondary shaft 2 while rotating integrally with the secondary shaft 2.

The cam groove 61 and the guide pin 62 constitute the above-described secondary-side operation mechanism 60. Therefore, a direction of tilt of the cam groove 61 is set to a direction (e.g., a direction in which the moving thrust having a direction (arrow F) to reduce the groove width of the secondary sheave 4 is applied to the movable sheave 4B, when the rotary torque of the secondary shaft 2 is smaller than that of the movable sheave 4B) in which the moving thrust having a direction to eliminate the torque difference is applied to the movable sheave 4B, when the torque difference is made between the rotary torques of the secondary shaft 2 and the movable sheave 4B. A path of the cam groove 61 including a tilt angle may be set to an arbitrary form such as a linear or curved form in accordance with an imparted performance, and is easily worked.

The secondary-side operation mechanism 60 is disposed in this manner. For example, when a motorbike starts going up a slope, a rotation speed of the fixed sheave 4A connected to the secondary shaft 2 decreases, and a speed difference is made from the movable sheave 4B which is going to continue its rotation by the V-belt 5. In this case, the guide pin 62 apparently pushes the cam groove 61 in an arrow F direction, the movable sheave 4B is pushed toward the fixed sheave 4A via the slider 52, and the groove width of the V-groove is forcibly reduced.

Next, an operation of the V-belt type continuously variable transmission 110 of the motorbike according to the first embodiment will be described.

When a speed varying signal is input from the control unit 200 into the electric motor 10, the reciprocating gear 12 and the rotary ring 13 rotate by the rotation of the electric motor 10, and the slider 22 fixed to the rotary ring 13 via the bearing 23 moves in the axial direction by the leading functions of the male screw 18 and the female screw 17. The movable sheave 3B integrated with the slider 22 moves, and the groove width of the primary sheave 3 changes.

For example, when the groove width of the primary sheave 3 decreases, the wound diameter of the V-belt 5 increases, and the transmission gear ratio shifts to a top side. When the groove width of the primary sheave 3 increases, the wound diameter of the V-belt 5 decreases, and the transmission gear ratio shifts to a low side.

On the other hand, the groove width of the secondary sheave 4 changes accompanying the change of the groove width of the primary sheave 3, and changes in reverse with respect to the primary sheave 3.

That is, when the wound diameter of the V-belt 5 with respect to the primary sheave 3 decreases (shifts to the low side), a biting force of the V-belt 5 decreases on the side of the secondary sheave 4. Therefore, slippage is generated between the movable sheave 4B and the V-belt 5, and a speed difference is made between the movable sheave 4B and the fixed sheave 4A. Then, since the movable sheave 4B is pressed toward the fixed sheave 4A by the function of the cam groove 61 and the urging force of the compression coil spring 40, the groove width of the secondary sheave 4 is reduced, and the wound diameter of the V-belt 5 increases.

As a result, the transmission gear ratio between the primary sheave 3 and the secondary sheave 4 increases, and the torque transmitted to the driving wheel 305 increases. Conversely, when the wound diameter of the V-belt 5 with respect to the primary sheave 3 increases (shifts to the top side), the V-belt 5 bites into the V-groove on the secondary sheave 4 side, and the movable sheave 4B moves apart from the fixed sheave 4A against the urging force of the compression coil spring 40. Therefore, since the groove width of the secondary sheave 4 increases, and the wound diameter of the V-belt 5 increases, the transmission gear ratio between the primary sheave 3 and the secondary sheave 4 decreases.

When the number of rotations of the secondary sheave 4 is not less than a predetermined value, the secondary sheave 4 is connected to the secondary shaft 2 via the centrifugal clutch 70, and the rotation of the secondary shaft 2 is transmitted to the axle 300 via the gear row of the reducer 302.

According to the above-described V-belt type continuously variable transmission 110, as shown in FIG. 4, the sheave position detection sensor 550 provided in the transmission casings 100, 101 is disposed in the vicinity of the air introducing port 101A in the air current path of the outside air introduced into the belt chamber 103 which is defined by the left-side part 100b of the transmission casing 100 and the casing 101. Therefore, even when the current of the air in the transmission casings 100, 101 is a wear powder conveying current for conveying toward the air exhaust port 101B wear powders of the V-belt 5 generated by friction with the primary sheave 3, the sheave position detection sensor 550 is not brought into contact with the air current including the wear powders, and therefore the sensor is not polluted with the attached wear powders.

Therefore, a dust-proof measure for preventing the sticking of the wear powders can be omitted from the sheave position detection sensor 550, and miniaturization of the sheave position detection sensor 550 can be realized by the omission of the dust-proof measure.

Moreover, since the sheave position detection sensor 550 is miniaturized, the current of the air in the transmission casings 100, 101 is prevented from being interrupted by the sheave position detection sensor 550. The current of the outside air in the transmission casings 100, 101 is kept to be satisfactory, and a stable cooling performance by the outside air can be secured.

Furthermore, in the V-belt type continuously variable transmission 110 of the present embodiment, as to the sheave position detection sensor 550 provided in the transmission casings 100, 101, the sensor main body 551 is disposed outside the primary sheave 3, and a space required for disposing the sensor main body 551 is preferably secured above or in front of the primary sheave 3. It is to be noted that the teachings of the present invention is not limited to the embodiment. For example, the sensor main body 551 of the sheave position detection sensor 550 may be disposed outside the secondary sheave 4 and in the range of the width occupied by the corresponding sheave.

Therefore, since the sheave position detection sensor 550 is disposed, a width-direction dimension of the V-belt type continuously variable transmission 110 does not increase. The transmission can be constituted to be compact in the width direction, and this is advantageous for mounting the sensor on a vehicle such as a motorbike.

Moreover, the sheave position detection sensor 550 is not disposed in a space between the movable sheave 3B of the primary sheave 3 and the reciprocating gear 12 for moving the movable sheave 3B in the axial direction. Therefore, the sheave moving mechanism including the reciprocating gear 12 and the like can be disposed in the vicinity of the movable sheave 3B of the primary sheave 3, and the width-direction dimension of the V-belt type continuously variable transmission 110 can be set to be compact more thoroughly.

It is to be noted that in the present embodiment, the detector 553 of the sheave position detection sensor 550 is allowed to abut on the inner surface of the reciprocating gear 12, so that the position of the reciprocating gear 12 is detected. By this constitution, the width-direction dimension can be set to be compact. Moreover, a structure of the sheave position detection sensor 550 is simplified, and manufacturing costs can be reduced.

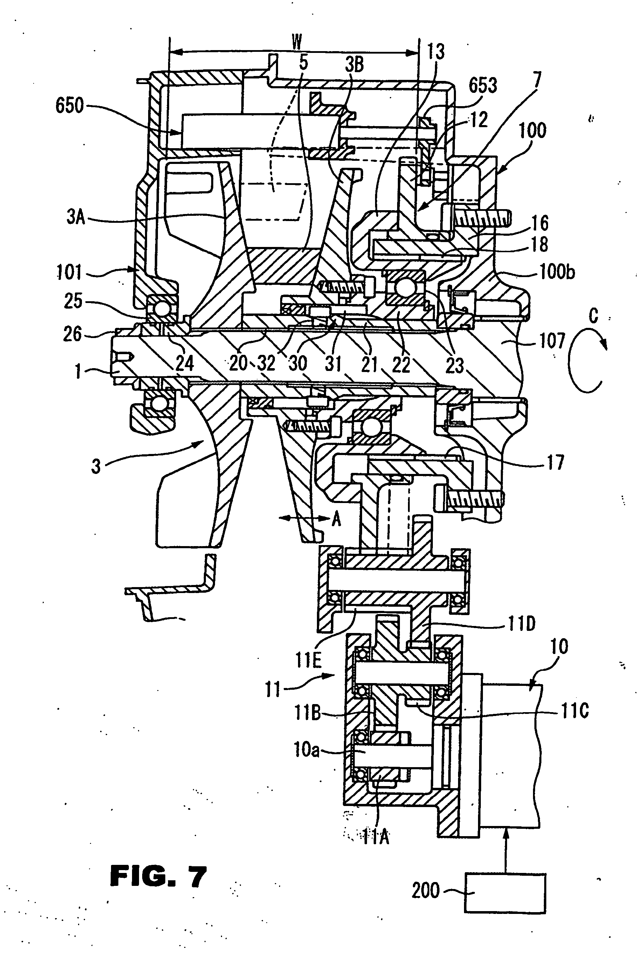

Additionally, the V-belt type continuously variable transmission of the present embodiment is not limited to this. When there is an allowance in an installation space or the manufacturing cost of the sensor, for example, a sheave position detection sensor 650 is constituted as shown in FIG. 7 in which a tip of a detector 653 formed substantially into a U-shape is allowed to abut on an outer surface of the reciprocating gear 12, and a position of the reciprocating gear 12 is detected.

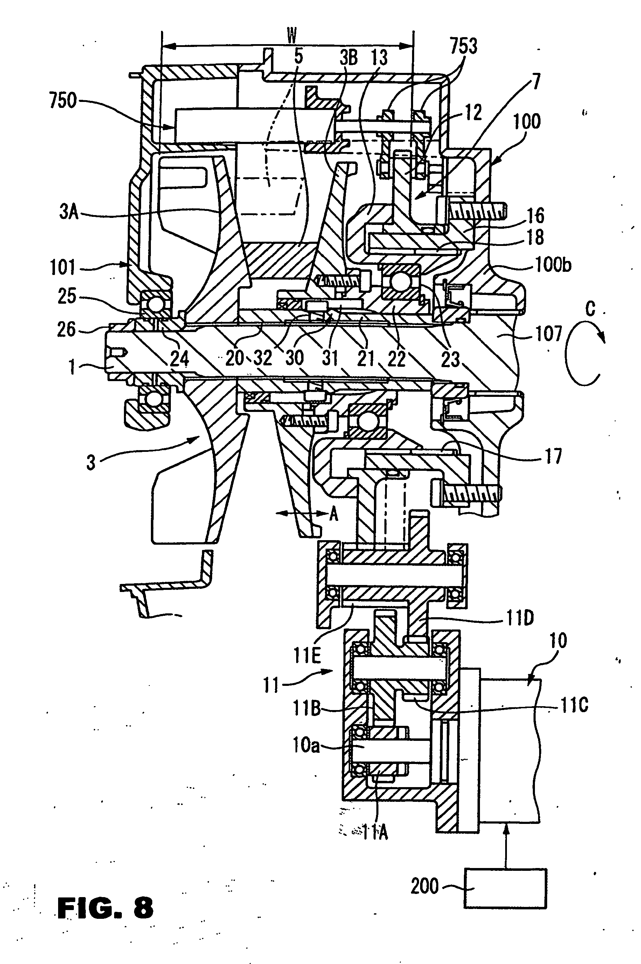

Moreover, a sheave position detection sensor 750 may be constituted as shown in FIG. 8 in which an outer peripheral portion of a reciprocating gear 12 is held relatively rotatably in an axial direction by a pair of detectors 753, 753, and a position of the reciprocating gear 12 is detected.

Furthermore, in the above-described embodiment, the detector 553 of the sheave position detection sensor 550 is engaged with the reciprocating gear 12, and a position of the movable sheave 3B is indirectly detected via the position of the reciprocating gear 12.

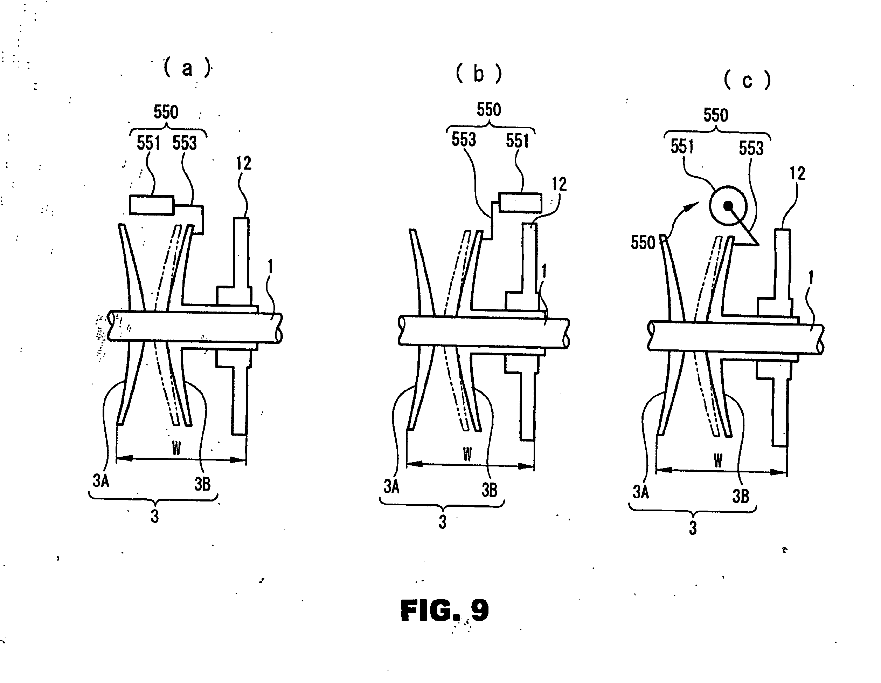

However, as shown in FIGS. 9(a) to (c), the detector 553 may be brought into direct contact with a back surface of the movable sheave 3B, and the position of the movable sheave 3B may be directly detected. That is, the sheave position detection sensor 550 can detect a position of either of the reciprocating gear 12 and the movable sheave 3B to thereby detect an axial position of the movable sheave 3B in the primary sheave 3.

Moreover, by use of the sheave position detection sensor 550 whose detector 553 linearly moves in a central axis line direction of the sensor main body 551 to thereby detect the position, a shape formed by the shaft portion 553a linearly movably supported with respect to the sensor main body 551 and the tip extending portion 553b bonded to the tip of the shaft portion 553a is not limited to a substantial L-shape shown in FIG. 6.

For example, the detector 553 may be formed into such a substantial U-shape that the tip of the detector abuts on the back surface of the movable sheave 3B as shown in FIG. 9(a), or into such a crank shape that the tip of the detector abuts on the back surface of the movable sheave 3B as shown in FIG. 9(b).

Furthermore, in the sheave position detection sensor 550, as shown in FIG. 9(c), the detector 553 is disposed rotatably around a central axis of the sensor main body 551, and the position of the movable sheave 3B may be detected in accordance with a rotation of the detector 553 whose tip is allowed to abut on the back surface of the movable sheave 3B.

Additionally, according to the present embodiment, to achieve a compact structure, the sheave position detection sensor may be disposed anywhere in the range of the sheave occupied width W occupied by the corresponding primary sheave 3 and the reciprocating gear 12 in a primary-shaft direction and in the outside of the outer periphery of the primary sheave 3.

Therefore, when this requirement is satisfied, as shown in FIG. 9(c), a central axis of the sensor main body 551 may be disposed in a direction crossing the primary shaft 1 at right angles.

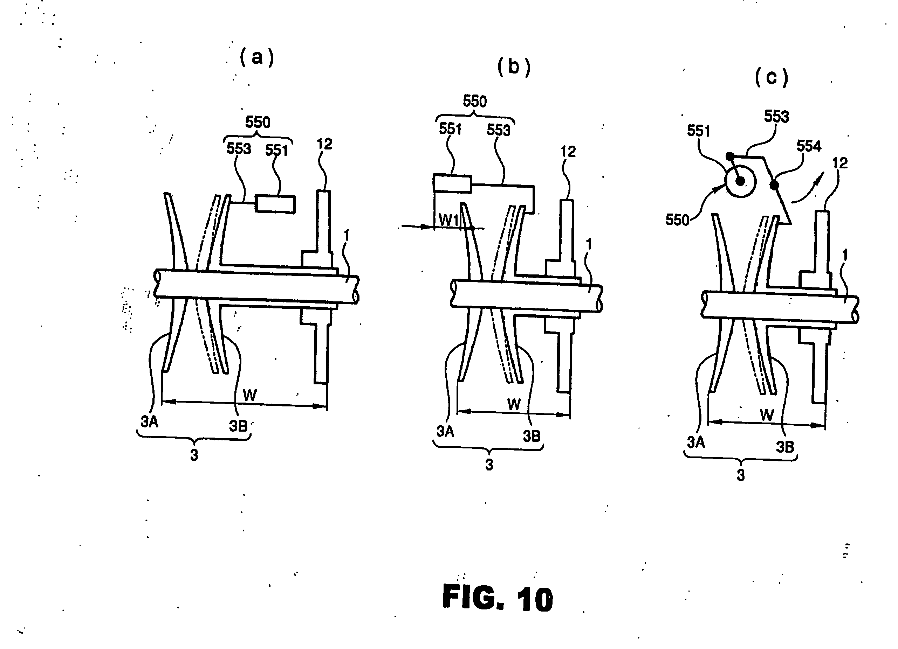

However, as shown in FIG. 10(a), when the sheave position detection sensor 550 is disposed between the movable sheave 3B and the reciprocating gear 12 inside the outer periphery of the movable sheave 3B, the above-described requirement is not satisfied, the reciprocating gear 12 cannot be disposed in the vicinity of the movable sheave 3B, and this causes enlargement in the width direction.

Moreover, even when a base end portion of the sensor main body 551 protrudes from the fixed sheave 3A as shown in FIG. 10(b), the sensor does not satisfy the requirement that the sensor be disposed within the sheave occupied width W of the corresponding primary sheave 3 and the reciprocating gear 12 in the primary-shaft direction. The base end portion of the sensor main body 551 protrudes by a dimension W1 from the sheave occupied width W, and this causes enlargement in the width direction.

Furthermore, even when the above-described requirement is satisfied, in a link structure in which the detector 553 has a rotation supporting point 554 as shown in FIG. 10(c), the detector 553 has a large installation space in the outer periphery of the primary sheave 3. Therefore, there is a possibility that the enlargement is unfavorably caused in a diametric direction of the periphery of the primary sheave 3.

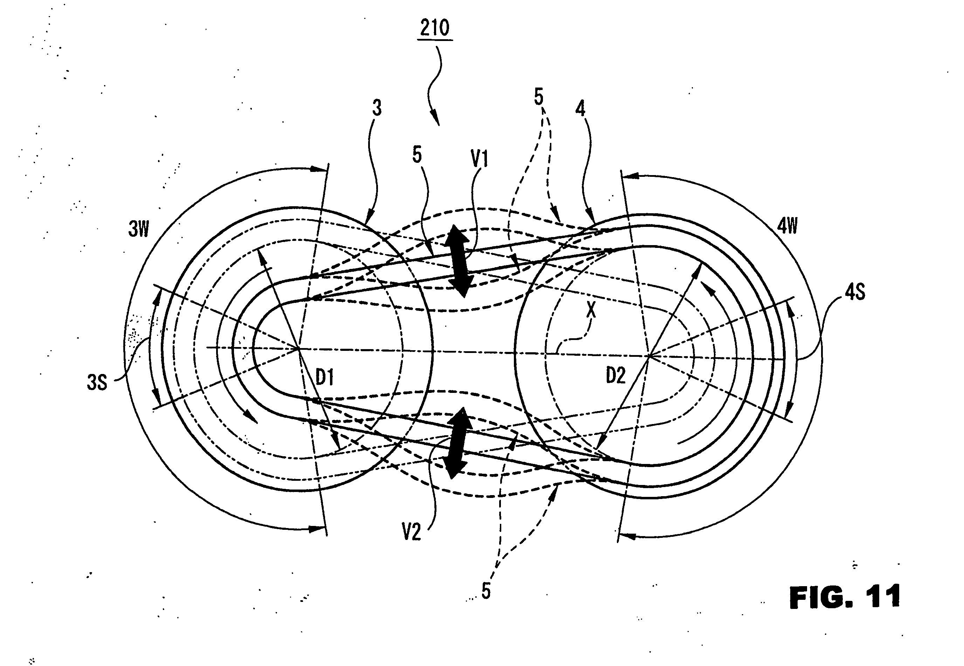

FIG. 11 is a schematic side view of a V-belt type continuously variable transmission 210 showing a favorable installation range of the sheave position detection sensor disposed outside the primary sheave 3 or the secondary sheave 4 and in the range of the corresponding sheave occupied width.

As shown in FIG. 11, the sheave position detection sensor disposed outside the primary sheave 3 or the secondary sheave 4 is preferably disposed in a region of a belt wound range 3W at a time when the wound diameter of the V-belt 5 wound around the primary sheave 3 is maximum (D1) as viewed in the primary-shaft direction, or a region of a belt wound range 4W at a time when the wound diameter of the V-belt 5 wound around the primary sheave 4 is maximum (D2) as viewed in a secondary-shaft direction. The sensor is more preferably disposed in a region of a belt wound range 3S or 4S substantially of 45 degrees centering on a sheave center line X passing through the axis lines of the primary sheave 3 and the secondary sheave 4.

That is, the V-belt 5 of the V-belt type continuously variable transmission 210 vibrates both on belt upper and lower sides because of an increase of an applied vibrating force by the rotation of the engine 105 accompanying a rapidly varying speed at an acceleration/deceleration time, and a missing tensile force on a loosened side.

Moreover, another factor of the vibration is a speed variation by acceleration/deceleration, a belt pressing force variation or the like. When the speed of the V-belt 5 varies from the top side (shown by a two-dot chain line in FIG. 11) to the low side (shown by a solid line in FIG. 11) or from the low side to the top side, the belt vibration increases.

Furthermore, the vibration of the V-belt 5 is generated from idling until a clutch is completely engaged, and at a deceleration time from the clutch is disengaged until the transmission is stopped. In a situation in which the tensile force of the belt is small, vibration V2 increases on the lower side of the belt.

Moreover, the belt vibration increases as described above, accompanying an increase of wear on the V-belt 5.

Therefore, as shown by broken lines in FIG. 11, there is a possibility that the V-belt 5 is rapidly vibrated and is brought into contact with the sensor by the increased vibrations V1, V2 of the upper and lower sides of the worn belt. Therefore, sensors which are vulnerable to shock, including the sheave position detection sensor and the like, are prevented from being disposed outside (region other than the belt wound ranges 3W and 4W) the vibrating direction (V1, V2) of the belt 5 between the primary sheave 3 and the secondary sheave 4. The sensors are preferably installed in the region of the belt wound range 3W or 4W where the belt 5 is wound around the sheave as shown in FIG. 11.

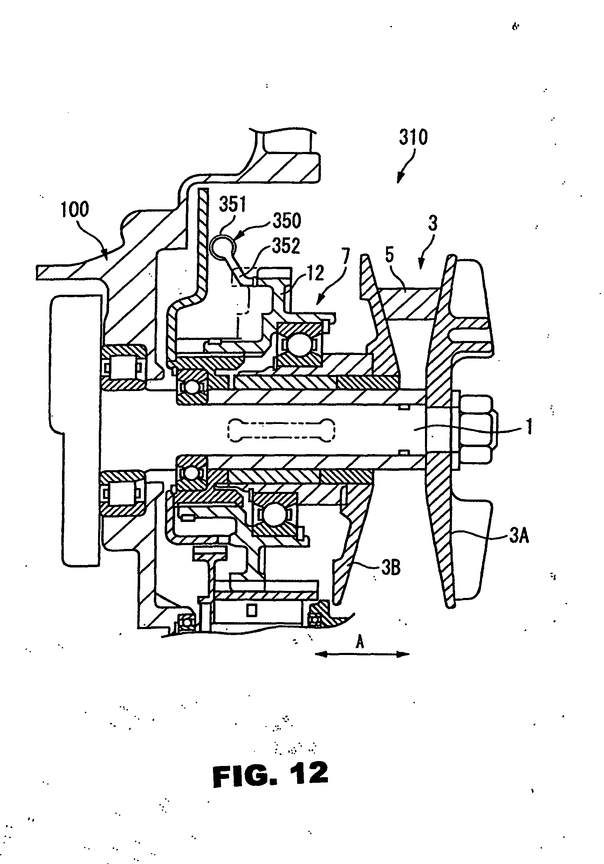

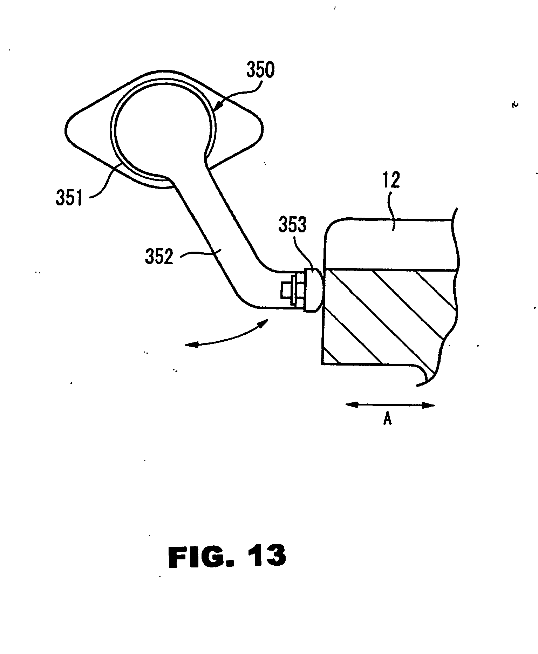

FIG. 12 is a major part sectional view of the V-belt type continuously variable transmission according to a second embodiment, and FIG. 13 is an enlarged front view of the sheave position detection sensor shown in FIG. 12.

It is to be noted that a V-belt type continuously variable transmission 310 of the second embodiment has a constitution substantially similar to that of the V-belt type continuously variable transmission 110 of the first embodiment except that a sheave position detection sensor 350 comprising a rotary encoder is used instead of the sheave position detection sensor 550. Therefore, constituting members having the same functions are denoted with the same reference numerals, and detailed description is omitted.

In the V-belt type continuously variable transmission 310 of the second embodiment, as shown in FIGS. 12 and 13, the sheave position detection sensor 350 is the rotary encoder comprising: a sensor main body 351; and an arm 352 for detection disposed rotatably around a central axis of this sensor main body 351.

As to the arm 352 for detection, a contact portion 353 of a pivoting tip of the arm is rotated and urged in a direction in which the portion is brought into press contact with a member to be detected by a helical torsion spring (not shown) which is disposed between a base end portion of the arm and the sensor main body 351.

The above-described sheave position detection sensor 350 is disposed outside the corresponding groove width adjustment mechanism 7, and a central axis direction of the sensor main body 351 is allowed to cross an axis line direction of a primary shaft 1. Moreover, the contact portion 353 of the arm 352 for detection is fixed to a transmission casing 100 in a state in which the portion abuts on a side surface of a reciprocating gear 12. It is to be noted that the contact portion 353 whose contact surface is formed into a substantially spherical surface is maintained in a state in which the portion abuts on the reciprocating gear 12 by a rotary urging force of the helical torsion coil.

Therefore, the arm 352 for detection of the sheave position detection sensor 350 is rotated and displaced in accordance with movement of the reciprocating gear 12 in an axial direction, and the sensor detects a change of a sheave position of the movable sheave 3B via the displacement of the reciprocating gear 12 in the axial direction.

That is, in the V-belt type continuously variable transmission 310 of the second embodiment, the contact portion 353 disposed on the pivoting tip of the arm 352 for detection is allowed to abut on the side surface of the reciprocating gear 12, and a rotation of the arm 352 for detection is detected by the rotary encoder in the sensor main body 351.

Consequently, as to the sheave position detection sensor 350, the sensor main body 351 can be constituted to be compact in the axis line direction of the primary shaft 1. By use of the rotary encoder which has highly dust-preventive properties of the sensor itself and which is inexpensive as the sheave position detection sensor 350, there can be provided the V-belt type continuously variable transmission 310 which has high reliability and which is inexpensive.

It is to be noted that the power unit 410 for the motorbike has been described above in the embodiment, but the power unit 410 of the present embodiment is not limited to that for the motorbike, and, needless to say, the unit is applicable to a three or four-wheeled buggy which is a comparatively light-weight small-sized vehicle. The description above discloses (amongst others) an embodiment of a V-belt type continuously variable transmission comprising: a primary shaft into which a driving power of a power source is input; a secondary shaft which is disposed in parallel with the primary shaft; a primary sheave and a secondary sheave which are disposed on the primary shaft and the secondary shaft, respectively, the primary sheave and the secondary sheave having sheaves which define a V-groove for winding a belt therebetween, the sheaves being movable in an axial direction to change a groove width of the V-groove; a V-belt which is wound around the V-grooves of the primary and secondary sheaves and which transmits a rotary driving power between the sheaves; a groove width adjustment mechanism which adjusts the groove widths of the primary sheave and the secondary sheave; a casing which houses and holds the primary sheave and the secondary sheave; and a sheave position detection sensor which detects a sheave position of the movable sheave, wherein the sheave position detection sensor is disposed in the vicinity of an air introducing port for introducing outside air into the casing.

Moreover, the description above discloses a V-belt type continuously variable transmission comprising: a primary shaft into which a driving power of a power source is input; a secondary shaft which is disposed in parallel with the primary shaft; a primary sheave and a secondary sheave which are disposed on the primary shaft and the secondary shaft, respectively, the primary sheave and the secondary sheave each having a fixed sheave and a movable sheave which define a V-groove for winding a belt therebetween, the movable sheave being movable in an axial direction to change a groove width of the V-groove; a V-belt which is wound around the V-grooves of the primary and secondary sheaves and which transmits a rotary driving power between the sheaves; a groove width adjustment mechanism which adjusts the groove widths of the primary sheave and the secondary sheave; a casing which houses and holds the primary sheave and the secondary sheave; and a sheave position detection sensor which detects a sheave position of the movable sheave, wherein the sheave position detection sensor comprises: a sensor main body which is disposed outside the primary sheave or the secondary sheave and in a range of a width occupied by the corresponding sheave; and a detector which extends out of the sensor and which is movable in accordance with the position of the movable sheave.

It is to be noted that in the V-belt type continuously variable transmission constituted as described above, the sheave position detection sensor is preferably installed in a region of a belt wound range at a time when a wound diameter of the V-belt wound around the primary sheave or the secondary sheave is maximum as viewed in the axial directions of the primary shaft and the secondary shaft.

The description above discloses a V-belt type continuously variable transmission comprising: a primary shaft into which a driving power of a power source is input; a secondary shaft which is disposed in parallel with the primary shaft; a primary sheave and a secondary sheave which are disposed on the primary shaft and the secondary shaft, respectively, the primary sheave and the secondary sheave having sheaves which define a V-groove for winding a belt therebetween, the sheaves being movable in an axial direction to change a groove width of the V-groove; a V-belt which is wound around the V-grooves of the primary and secondary sheaves and which transmits a rotary driving power between the sheaves; a groove width adjustment mechanism which adjusts the groove widths of the primary sheave and the secondary sheave; a casing which houses and holds the primary sheave and the secondary sheave; and a sheave position detection sensor which detects a sheave position of the movable sheave, wherein the sheave position detection sensor comprises a rotary encoder for detecting a rotation of an arm for detection which rotates in accordance with the sheave position of the movable sheave.

Moreover, a vehicle is preferable on which the V-belt type continuously variable transmission constituted as described above is mounted.

According to the embodiment of V-belt type continuously variable transmission constituted as described above, the sheave position detection sensor housed in the casing is provided in the vicinity of the air introducing port in an air current path. Therefore, even when the current of the air in the casing is a wear powder conveying current for conveying toward the air exhaust port wear powders of the V-belt generated by friction with the primary sheave, the sheave position detection sensor is not brought into contact with the air current including the wear powders, and therefore the sensor is not polluted with the attached wear powders.

Therefore, a dust-proof measure for preventing the sticking of the wear powders can be omitted from the sheave position detection sensor, and miniaturization of the sheave position detection sensor can be realized by the omission of the dust-proof measure.

Moreover, according to one of the other embodiments of the V-belt type continuously variable transmission constituted as described above, the sensor main body of the sheave position detection sensor housed in the casing is disposed outside the primary sheave or the secondary sheave and in the range of the width occupied by the corresponding sheave. Therefore, a space required for installing the sensor main body may be secured, for example, above or in front of the primary sheave or the secondary sheave.

Therefore, a width-direction dimension of the V-belt type continuously variable transmission does not increase by the installation of the sheave position detection sensor. The transmission can be constituted to be compact in a width direction, and this is advantageous in mounting the transmission on a motorbike or the like.

Moreover, according to one of the other embodiments of the V-belt type continuously variable transmission constituted as described above, the sheave position detection sensor housed in the casing comprises the rotary encoder for detecting the rotation of the arm for detection which rotates in accordance with the sheave position of the movable sheave, and therefore the sensor itself can be constituted to be compact in a primary shaft direction. By use of the rotary encoder which has highly dust-preventive properties and which is inexpensive as the sheave position detection sensor, there can be provided the V-belt type continuously variable transmission which has high reliability and which is inexpensive.

The description above still further discloses a vehicle according to claim 6, on which the V-belt type continuously variable transmission according to the above embodiments is mounted.

The description above particularly discloses a compact V-belt type continuously variable transmission in which a sheave position detection sensor disposed in a casing is miniaturized, so that a width-direction dimension can be prevented from being increased, wherein in a V-belt type continuously variable transmission 110 for a motorbike in which a belt 5 is wound between a primary sheave 3 and a secondary sheave 4 having variable groove widths, a sheave position detection sensor 550 for detecting an axial position of a movable sheave 3B in a primary sheave 3 is disposed in the vicinity of an air introducing port 101A in an air current path from the air introducing port 101 A to an air exhaust port 101B in a transmission casing 101.

## Claims

1. V-belt type continuously variable transmission (110) comprising primary and secondary sheaves (3,4) defining V-grooves for winding a belt (5) there between, the sheaves (3,4) being movable in an axial direction to change a groove width of the V-grooves by a groove width adjustment mechanism (7), and being housed in a casing (100,101) having an air introducing port (101A) for introducing outside air into the casing (100,101) and an air exhaust port (101 B) for discharging air from the casing (100,101), and a sheave position detection sensor (350,550,650,750) detecting a sheave position of a movable sheave (3A,4A),
**characterized in that**
the sheave position detection sensor (350,550,650,750) is disposed in the casing (100,101) in the vicinity of the air introducing port (101A) in an air current path from the air introducing port (101A) to the air exhaust port (101 B).

2. V-belt type continuously variable transmission according to claim 1, **characterized in that** the sheave position detection sensor (350,550,650,750) comprises a sensor main body (551) being disposed outside the primary sheave (3) or the secondary sheave (4) and in a range of a width (W) occupied by the corresponding sheave (3,4) and comprising a detector (553) extending out of the sensor main body (551), and being movable in accordance with the sheave position of the movable sheave (3A).

3. V-belt type continuously variable transmission according to claim 2, **characterized in that** the sheave position detection sensor (350,550,650,750) is installed in a region of the belt (5) wound around at a time when a wound diameter of the V-belt wound around the primary sheave (3) or the secondary sheave (4) is maximum as viewed in the axial directions of the primary and secondary shafts (1,2).

4. V-belt type continuously variable transmission according to one of the claims 1 to 3, **characterized in that** the sheave position detection sensor (350) comprises a rotary encoder for detecting a rotation of an arm (352) for detection, which rotates in accordance with the sheave position of the movable sheave (3A).

5. V-belt type continuously variable transmission according to one of claims 1 to 4,
**characterized by**
a primary shaft (1), into which a driving power of a power source is input;
a secondary shaft (2), which is disposed in parallel with the primary shaft (1);
the primary sheave (3) and the secondary sheave (4) being disposed on the primary shaft (1) and the secondary shaft (2), respectively, the primary sheave (3) and the secondary sheave (4) having sheaves which define a V-groove for winding the belt (5) there between, the sheaves (3,4) being movable in an axial direction to change a groove width of the V-groove;
the V-belt (5) being wound around the V-grooves of the primary and secondary sheaves (3, 4) and transmitting a rotary driving power between the sheaves (3,4);
the groove width adjustment mechanism (7), which adjusts the groove widths of the primary sheave (3) and the secondary sheave (4); and
the casing (100,101) housing and holding the primary sheave (3) and the secondary sheave (4).

6. Vehicle on which a V-belt type continuously variable transmission according to one of the claims 1 to 5 is mounted.

## Patentansprüche

1. Stufenlos veränderbares Getriebe (110) vom Keilriemen- Typ, aufweisend Primär-und Sekundärscheiben (3, 4), die Keilnuten zum Umschlingengen eines Riemens (5) dort dazwischen bilden, wobei die Scheiben (3, 4) in einer axialen Richtung bewegbar sind, um eine Nutbreite der Keilnuten durch eine Nutbreiten- Einstellvorrichtung (7) zu verändern, und das aufgenommen ist in einem Gehäuse (100, 101), das eine Lufteinleitungsöffnung (101A) zum Einleiten von Außenluft in das Gehäuse (100, 101) und einer Luftausströmöffnung (101 B) zum Abgeben von Luft aus dem Gehäuse (100, 101) aufweist, und mit einem Scheibenpositions- Erfassungssensor (350, 550, 650, 750), der eine Scheibenposition einer bewegbaren Scheibe (3A, 4A) erfasst,
**dadurch gekennzeichnet, dass**
der Scheibenpositions- Erfassungssensor (350, 550, 650, 750) in dem Gehäuse (100, 101) in der Nähe der Lufteinleitungsöffnung (101A) in einem Luftstrompfad von der Lufteinleitungsöffnung (101A) zu der Luftausströmöffnung (101 B) angeordnet ist.

2. Stufenlos veränderbares Getriebe vom Keilriemen- Typ nach Anspruch 1, **dadurch gekennzeichnet, dass** der Scheibenpositions- Erfassungssensor (350, 550, 650, 750) einen Sensorhauptkörper (551) aufweist, der außerhalb der Primärscheibe (3) oder der Sekundärscheibe (4) und in einem Bereich einer Breite (W), eingenommen durch die entsprechende Scheibe (3, 4), angeordnet ist und der einen Detektor (553) aufweist, der sich aus dem Sensorhauptkörper (551) heraus erstreckt und der in Übereinstimmung mit der Scheibenposition der bewegbaren Scheibe (3A) bewegbar ist.

3. Stufenlos veränderbares Getriebe vom Keilriemen- Typ nach Anspruch 2, **dadurch gekennzeichnet, dass** der Scheibenpositions- Erfassungssensor (350, 550, 650, 750) in einem Bereich des Riemens (5) angeordnet ist, der zu einem Zeitpunkt umschlungen wird, wenn ein Umschlingungsdurchmesser des Keilriemens, geschlungen um die Primärriemenscheibe (3) oder die Sekundärriemenscheibe (4), maximal ist, wenn gesehen in den axialen Richtungen der Primär-oder Sekundärscheiben (3, 4).

4. Stufenlos veränderbares Getriebe vom Keilriemen- Typ nach einem der Ansprüche 1 bis 3, **dadurch gekennzeichnet, dass** der Scheibenpositions- Erfassungssensor (350) einen Dreh- Enkoder zum Erfassen einer Rotation eines Armes (352) zur Erfassung aufweist, der in Übereinstimmung mit der Scheibenposition der bewegbaren Scheibe (3A) rotiert.

5. Stufenlos veränderbares Getriebe vom Keilriemen- Typ nach einem der Ansprüche 1 bis 4,
**gekennzeichnet durch**
eine Primärwelle (1), in die eine Antriebskraft einer Antriebsquelle eingebracht wird;
eine Sekundärwelle (2), die zu der Primärwelle (1) parallel angeordnet ist;
die Primärriemenscheibe (3) und die Sekundärscheibe (4), die jeweils auf der Primärwelle (1) und der Sekundärwelle (2) angeordnet sind, wobei die Primärriemenscheibe (3) und die Sekundärscheibe (4) Scheiben haben, die eine Keilnut zum Umschlingen des Riemens (5) dazwischen bilden, wobei die Scheiben in einer axialen Richtung bewegbar sind, um die Nutbreite der Keilnut zu verändern;
den Keilriemen, der um die Keilnuten der Primär- und Sekundärscheiben (3, 4) geschlungen ist und eine Rotationsantriebskraft zwischen den Scheiben (3, 4) überträgt;
die Nutbreiten- Einstellvorrichtung (7), die die Nutbreiten der Primärriemenscheibe (3) und die Sekundärscheibe (4) einstellt; und
das Gehäuse (100, 101), das die Primärriemenscheibe (3) und die Sekundärscheibe (4) aufnimmt und hält.

6. Fahrzeug, an dem ein stufenlos veränderbares Getriebe vom Keilriemen- Typ nach einem der Ansprüche 1 bis 5 montiert ist.

## Revendications

1. Transmission à variation continue de type à courroie trapézoïdale (110) comprenant des poulies primaire et secondaire (3, 4) définissant des rainures trapézoïdales pour enrouler une courroie (5) entre celles-ci, les poulies (3, 4) étant mobiles dans une direction axiale pour changer une largeur de rainure des rainures trapézoïdales par un mécanisme d'ajustement de largeur de rainure (7), et étant logée dans un carter (100, 101) comportant un orifice d'entrée d'air (101A) pour faire entrer de l'air extérieur dans le carter (100, 101) et un orifice de sortie d'air (101B) pour évacuer l'air du carter (100, 101), et un capteur de détection de position de poulie (350, 550, 650, 750) détectant la position de poulie d'une poulie mobile (3A, 4A),
**caractérisée en ce que**
le capteur de détection de position de poulie (350, 550, 650, 750) est disposé dans le carter (100, 101) à proximité de l'orifice d'entrée d'air (101A) dans un trajet de courant d'air de l'orifice d'entrée d'air (101A) à l'orifice de sortie d'air (101B).

2. Transmission à variation continue de type à courroie trapézoïdale selon la revendication 1, **caractérisée en ce que** le capteur de détection de position de poulie (350, 550, 650, 750) comprend un corps principal de capteur (551) disposé à l'extérieur de la poulie principale (3) ou de la poulie secondaire (4) et dans une étendue d'une largeur (W) occupée par la poulie (3, 4) correspondante et comprenant un détecteur (553) s'étendant en dehors du corps principal de capteur (551), et étant mobile selon la position de poulie de la poulie mobile (3A).

3. Transmission à variation continue de type à courroie trapézoïdale selon la revendication 2, **caractérisée en ce que** le capteur de détection de position de poulie (350, 550, 650, 750) est installé dans une région de la courroie (5) enroulée autour quand un diamètre d'enroulement de la courroie trapézoïdale enroulée autour de la poulie principale (3) ou de la poulie secondaire (4) est maximal, tel que vu dans les directions axiales des axes principal et secondaire (1, 2).

4. Transmission à variation continue de type à courroie trapézoïdale selon l'une quelconque des revendications 1 à 3, **caractérisée en ce que** le capteur de détection de position de poulie (350) comprend un encodeur rotatif pour détecter une rotation d'un bras (352) pour la détection, qui tourne selon la position de poulie de la poulie mobile (3A).

5. Transmission à variation continue de type à courroie trapézoïdale selon l'une quelconque des revendications 1 à 4,
**caractérisée par** :
un axe principal (1), dans lequel une puissance d'entraînement d'une source de puissance est transmise ;
un axe secondaire (2), disposé en parallèle avec l'axe principal (1) ;
la poulie principale (3) et la poulie secondaire (4) étant disposées sur l'axe principal (1) et l'axe secondaire (2), respectivement, la poulie principale (3) et la poulie secondaire (4) étant des poulies définissant une rainure trapézoïdale pour enrouler la courroie (5) entre celles-ci, les poulies (3, 4) étant mobiles dans une direction axiale pour changer une largeur de rainure de la rainure trapézoïdale ;
la courroie trapézoïdale (5) étant enroulée autour des rainures trapézoïdales des poulies primaire et secondaire (3, 4) et transmettant une puissance d'entraînement rotative entre les poulies (3, 4) ;
le mécanisme d'ajustement de largeur de rainure (7), qui ajuste la largeur des rainures de la poulie principale (3) et la poulie secondaire (4) ; et
le carter (100, 101) contenant et maintenant la poulie principale (3) et la poulie secondaire (4).

6. Véhicule sur lequel est montée une transmission à variation continue de type à courroie trapézoïdale selon l'une quelconque des revendications 1 à 5.
